# EUROPEAN PATENT APPLICATION

(11) **EP 4 414 589 A1**
(43) Date of publication of application: **14.08.2024**
(21) Application number: 23156130.9
(22) Date of filing: 10.02.2023
(51) Int. Cl.: F16K 11/22, F16K 11/085, F16K 27/06, F16K 11/076, B60K 11/02, F16K 27/00

(54) **A VALVE ASSEMBLY FOR THERMAL MANAGEMENT SYSTEMS IN VEHICLES**

(71) Applicant: Nissens Cooling Solutions A/S, 8700 Horsens (DK)
(72) Inventor: Davidsen, Emil Wieck, 8700 Horsens (DK)
(74) Representative: Dragsted Partners A/S

(57) **Abstract**

A valve assembly for thermal management systems in vehicles, the valve assembly comprising: a first part (3) having a first fluid input and a first fluid output and having a first fluid pathway and a second fluid pathway, a second part (5) having a second fluid input and a second fluid output and having a third fluid pathway and a fourth fluid pathway, a connection part (7) connecting the first part (3) to the second part (5) and providing a first fluid communication channel from the first fluid pathway or the second fluid pathway to the third fluid pathway or the fourth fluid pathway, a first valve (55) positioned in the first part (3) and being in fluid communication with the first fluid pathway and/or the second fluid pathway and where the valve in a first mode is configured to provide fluid communication from the first fluid input or the second fluid input to the first fluid output or the second fluid output, a second valve (57) positioned in the second part (5) and being in fluid communication with the third fluid pathway and/or the fourth fluid pathway and where the valve in a first mode is configured to provide fluid communication from the second fluid input or the second fluid input to the second fluid output or the first fluid output, a first actuator (71) configured to move the first valve (55) and the second valve (57) from the first mode to the second mode simultaneously, and vice versa.

## Description

### Technical Field

A valve assembly for thermal management systems in vehicles, the valve assembly comprising: a first part having a first fluid input and a first fluid output, and having a first fluid pathway and a second fluid pathway, a second part having a second fluid input and a second fluid output, and having a third fluid pathway and a fourth fluid pathway.

### Description

Valve assemblies are widely used in technology and are often used to control complex fluid flows in a variety of applications, where one of the applications may be for thermal management systems in vehicles. The valve assemblies may be utilized to replace a number of valves that may be distributed in different locations to control the flow of cooling fluid between heat-generating parts, heat exchangers and/or heat-consuming parts in a vehicle. The flow of cooling fluid may have to be altered during operations in order to cool the correct parts and to deliver heat to the correct parts in order to optimize the operation of the vehicle.

In recent years, there has been a transformation of vehicles, where vehicles that have been powered by internal combustion engines have been replaced with vehicles that are powered by electric energy, where the energy storage is in the form of onboard batteries. In internal combustion engines, the flow of cooling liquid has been relatively simple, where the internal combustion engine produces a lot of heat energy, which can be utilized for cabin heat and has to be delivered to the surrounding atmosphere through a heat exchanger. However, when vehicles are powered by electric energy, significantly less heat is generated during operation, which means that for optimal operation the flow of the cooling fluid has to be adapted to suit the ambient temperature and the operational state of the vehicle. Thus, there is a need to have different configurations of coolant flow in different operating conditions, where the cooling fluid flows to different parts of the vehicle in different operating conditions.

This may be especially important in the technical field of industrial vehicles, where industrial vehicles are being developed to run on electric energy in contrast to being powered by internal combustion engines. Industrial vehicles will need to have large electric motors for providing hydraulic power and/or for providing power to the drivetrain of the vehicle. The requirement of powerful electric motors means that the vehicles will also have a need for energy storage, which requires a large amount of batteries to power the electric motors.

Thus, there is a need to provide cooling to the batteries, as the thermal management of batteries is an important aspect of the operation of batteries in electric vehicles to allow the batteries to operate at an optimal temperature to be able to deliver an optimal amount of power to the industrial vehicle.

Thermal management systems of electric vehicles exist, where the systems comprise multi-way valves to divert the flow of cooling fluid from one component to another component; US 2022/0316608 discloses multi-way valves for hybrid or electric cars. The production of electric cars is a high-volume production, where thermal management systems may be designed specifically for one type of car, and where valves for the cooling fluid may be designed for the specific vehicle due to the large number of vehicles that are to be put into a production line. However, for industrial vehicles, there is a need for a simple and reliable valve assembly that may easily be adjusted to the specific type of vehicle without excessive cost.

Thus, there is a need to provide a simple and reliable valve assembly for industrial electric vehicles.

According to the invention, there is provided a valve assembly for thermal management systems in vehicles, the valve assembly comprising: a first part having a first fluid input and a first fluid output, and having a first fluid pathway and a second fluid pathway, a second part having a second fluid input and a second fluid output and having a third fluid pathway and a fourth fluid pathway, a connection part connecting the first part to the second part and providing a first fluid communication channel from the first fluid pathway or the second fluid pathway to the third fluid pathway or the fourth fluid pathway, a first valve positioned in the first part and being in fluid communication with the first fluid pathway and/or the second fluid pathway and where the valve in a first mode is configured to provide fluid communication from the first fluid input or the second fluid input to the first fluid output or the second fluid output, a second valve positioned in the second part and being in fluid communication with the third fluid pathway and/or the fourth fluid pathway and where the valve in a first mode is configured to provide fluid communication with the second fluid input or the second fluid input to the second fluid output or the first fluid output, a first actuator configured to move the first valve and the second valve from the first mode to the second mode simultaneously, and vice versa.

The fluid pathways of the first part and the second part may be in fluid communication with each other, where e.g. a fluid pathway in the first part is in fluid communication with a first input, and via the connection part the fluid communication may be transferred from the first part to the second part and to a fluid pathway in the second part, where the fluid pathway in the second part may be in fluid communication with an output in the second part, so that the fluid communication may be from an input in the first part to an output in the second part. Thus, the fluid flowing in a fluid pathway in the first part may be communicated via a fluid communication channel in the connection part to a fluid pathway in the second part.

By providing a valve assembly having a first valve and a second valve that are configured to be actuated simultaneously using one actuator while operating in the first part and the second part, respectively, it is possible to simplify the functioning of the valve assembly and change the flow of fluid from one fluid output to another fluid output for each of the valves. Thus, if the valve assembly has two fluid inputs and two fluid outputs, the movement of the first valve and the second valve may change the flow of fluid through the first fluid output to the second fluid output, and vice versa for the second fluid output to the first fluid output. Accordingly, a first coolant fluid flow that may enter the first fluid input may be switched from the first fluid output to the second fluid output, and a second coolant fluid flow that may enter the second fluid output may be switched from the second fluid output to the first fluid output.

Thus, the flow of the coolant fluid may be altered by one actuation movement of the first actuator. Moreover, when it may be necessary to revert to the previous position, the actuator may be activated to move the valves from their second mode towards their first mode to return the flow of the coolant to its first configuration.

The connection part may have areas where fluid communication is prevented from a fluid channel in the first part to a fluid channel in the second part, so that fluid communication between the first part and the second part can be directed towards the fluid communication channels.

In one exemplary embodiment, the first valve may have a first rotational axis, and the second valve may have a second rotational axis, where the first rotational axis and the second rotational axis may be coincident (coaxial). The first valve and the second valve may have a valve axis, where the valve axis is coaxial with the rotational axis of the valves. Thus, an imaginary valve axis of the first valve and the second valve may be coincident or coaxial, so that the first valve and the second valve may rotate along the same rotational axis. Thus, when the first valve is rotated along its first rotational axis, the second valve may be rotated simultaneously along the same or a coincident second rotational axis. Thus, the actuator may provide a rotational movement along the rotational axis of the first rotational axis and the second rotational axis. The actuator may have a first actuator rotational axis which is coincident with the first rotational axis and the second rotational axis.

In one exemplary embodiment, the first part and/or the second part may have a first surface, where the fluid pathways are formed as channels extending into the first surface of the first and/or second parts. Thus, the fluid pathways may be formed as channels or grooves in the first surface of the first part and/or the second part, where an upper boundary of the fluid channel may be the first surface of the first and/or the second part, and a lower boundary of the fluid channel may be the bottom part of the groove (channel). The fluid channels in the first part and/or the second part may have side walls that extend in a vertical direction. The channels may be U-shaped, where the channels are open at the first surface of the first part and/or the second part, and the side walls and the bottom define the flow path of the fluid channels. This may mean that the fluid channels of the first part and/or the second part may be arranged in the same two-dimensional plane, where the two-dimensional plane is parallel to a two-dimensional plane of the first part and/or the second part.

In one exemplary embodiment, the connection part may have a first surface that may be connected to the first surface of the first part and a second surface that may be connected to the first surface of the second part (where the connection parts define a part of the fluid pathways of the first and/or the second part (i.e. close off the pathways in a radial direction)). The first surface and the second surface of the connection part may be on opposite sides of the connection part, where a plane of the first surface of the connection part is parallel to the second surface of the connection part. Thus, when assembled, the first surface of the first part faces the first surface of the second part, and where the connection part is positioned between the first surface of the first part and the first surface of the second part. The first part and/or the second part and/or the connection part may have the same dimensions, so that the outer peripheral edges of the first part, the second part and the third part are aligned with each other when the parts are assembled.

In one exemplary embodiment, the valve assembly may further comprise: a third valve positioned in the first part and being in fluid communication with the first fluid pathway and/or the second fluid pathway and where the valve in a first mode is configured to provide fluid communication from the first fluid input or the second fluid input to the first fluid output or the second fluid output, a fourth valve positioned in the second part and being in fluid communication with the third fluid pathway and/or the fourth fluid pathway and where the valve in a first mode is configured to provide fluid communication from the first fluid input or the second fluid input to the second fluid output or the first fluid output, and a second actuator configured to move the first valve and the second valve from the first mode to the second mode simultaneously, and vice versa.

By providing a valve assembly having a third valve and a fourth valve that are configured to be actuated simultaneously using one actuator (second actuator) while operating in the first part and the second part, respectively, it is possible to simplify the functioning of the valve assembly and change the flow of fluid from one fluid output to another fluid output for each of the valves. Thus, if the valve assembly has three or four fluid inputs and three or four fluid outputs, the movement of the third valve and the fourth valve together with the first valve and the second valve may change the flow of fluid through the first fluid output to the third or fourth fluid output, and vice versa for the second fluid output to the first fluid output, the third fluid output or the fourth fluid output.

Thus, having the first and second valves in their first mode and the third and fourth valves in their first mode, the valve arrangement may define a first configuration for the valve assembly, where there is a predefined flow of fluid from the first fluid input to the first fluid output. By changing the first valve and the second valve to their second mode and maintaining the third and fourth valves in their second mode, the fluid flow configuration may be changed, so that the fluid input is in fluid communication with the second fluid output. Furthermore, by changing the mode of the third and fourth valves to their second mode, so that all valves are in their second mode, the valve assembly may define a completely different configuration, where the first fluid input is in fluid communication with e.g. the third fluid output. Furthermore, by having the first and second valves in their second mode and the third and fourth valves in their second mode, the first fluid input may be in fluid communication with the fourth fluid output. The change of the valves may change the fluid communication between all of the fluid inputs and fluid outputs, so that the valves may be configured to allow up to four different flow configurations.

In one exemplary embodiment, the first valve and the second valve may be four-way valves or three-way valves, and the second valve and the third valve may be four-way valves or three-way valves. By having the first and second valves as four-way valves, and the third and fourth valves as three-way valves, the assembly may define three different flow configurations for the valve assembly. By having all the valves as four-way valves, the valve assembly may have four different flow configurations. By having all the valves as three-way valves, the valve assembly may have at least two different flow configurations.

Thus, the flow of the coolant fluid may be altered by one actuation movement of the first and/or second actuator. When it may be necessary to revert to the previous position, the actuator may be activated to move the valves from their second mode towards their first mode to return the flow of the coolant to its first configuration.

In one exemplary embodiment, the third valve may have a third rotational axis, and the fourth valve may have a fourth rotational axis, where the third rotational axis and the fourth rotational axis are coincident (coaxial). The third valve and the fourth valve may have a fourth valve axis, where the fourth valve axis is coaxial with the rotational axis of the valves. Thus, an imaginary valve axis of the third valve and the fourth valve may be coincident or coaxial, so that the third valve and the fourth valve may rotate along the same rotational axis. Thus, when the third valve is rotated along its third rotational axis, the fourth valve may be rotated simultaneously along the same or a coincident fourth rotational axis. Thus, the actuator may provide a rotational movement along the rotational axis of the third rotational axis and the fourth rotational axis. The actuator may have a second actuator rotational axis which is coincident with the third rotational axis and the fourth rotational axis.

In one exemplary embodiment, the first part or the second part may comprise a third fluid input and/or a third fluid output, and a fourth fluid input and/or a fourth fluid output. This means that the valve assembly may have between two and four fluid inputs and between two and four fluid outputs.

In one exemplary embodiment, the valve assembly may define a plurality of fluid communications between one fluid input and one fluid output. Thus, for each configuration, one fluid input is only in fluid communication with one fluid output, which means that the cooling fluid that enters the fluid input comes out of the fluid output in fluid communication with the fluid input. This also means that the fluid that enters one fluid input does not mix with a fluid that flows into another fluid input. However, in another configuration of the valve assembly, one fluid input may be arranged to be mixed with another fluid input to exit the valve assembly via a common fluid outlet.

In one exemplary embodiment, the first valve and the second valve may be constructed as one component and/or where the third valve and the fourth valve are constructed as a single component. Thus, the single component may define both the first valve and the second valve, or the third valve and the fourth valve. The term "single component" does not necessarily mean that the component has to be made out of one part; it may be made out of a plurality of parts that are mechanically attached or joined to each other, allowing the plurality of parts to operate as one single part.

In one exemplary embodiment, the connection part may comprise a first valve opening that is coincident (coaxial) with the rotational axis of the first valve and the second valve and/or a second valve opening that is coincident (coaxial) with the rotational axis of the third valve and the fourth valve. The first valve opening may be an opening that allows a mechanical connection between the first valve and the second valve and/or allows a mechanical connection between the third valve and the second valve. As an example, when a mechanical rotational force is applied to the first valve, the second valve rotates with the first valve through a mechanical connection in the connecting part, and vice versa. The same applies mutatis mutandis to the third and fourth valves.

In one exemplary embodiment, the first valve is positioned on one side of the connecting part, and the second valve is positioned on the opposite side of the connecting part. The same applies to the third and fourth valves, where the third valve may be positioned on one side of the connecting part, and the fourth valve may be positioned on the opposite side of the connecting part.

In one exemplary embodiment, the connecting part may be a plate and/or a sheet, or a part having a two-dimensional plane and having a thickness in the third dimension, where a fluid communication channel may be in the form of a throughgoing opening through the plate, sheet or plane; a valve opening may be in the form of a throughgoing opening, while other parts of the plate, sheet or plane may be solid and prevents fluid or mechanical communication between the opposing sides of the plate, sheet or plane. In one exemplary embodiment, the connection part may separate a fluid pathway of the first part from a fluid pathway of the second part. Thus, the connection part may define a part of the circumference of a fluid pathway of the first part and/or the second part, so that a first surface of the connection part may close a radial part of a fluid pathway of the first part on one side, and a second surface of the connection part may define a radial part of a fluid pathway of the second part on the opposite side. Thus, when the first part and the second part are not connected to each other via the connection part, the fluid pathways may be open in a direction facing the first surface of the first part and/or the second part, and when connected to each other via the connection part, the fluid pathways are closed in the direction facing the first surface of the first part and/or the second part using the connection part. A fluid communication channel in the connection part may provide fluid communication from the first part to the second part, allowing a cooling fluid to be transported from the first part to the second part within the boundary of the valve assembly. Thus, a fluid input of the first part may thereby be in fluid communication with a fluid output of the second part.

In one exemplary embodiment, the valve assembly may be a layered construction in which the first part is in a first layer, the connection part is in a second layer, and the second part is in a third layer, where the second layer is positioned between the first layer and the third layer.

In one exemplary embodiment, the first part may comprise a first valve seat configured to receive the first valve and/or the third valve, and the second part may comprise a second valve seat configured to receive the second valve and/or the fourth valve. The valve seats may be in fluid communication with at least two, three or four fluid pathways in the first part and/or the second part, allowing the valve to alter the flow path through the valve seat from one fluid pathway to another fluid pathway, depending on the position (mode) of the valve.

### Brief description of the drawings

The following is an explanation of exemplary embodiments with reference to the drawings, in which:
Fig. 1 is an exploded perspective view of one embodiment of a valve assembly in accordance with the present disclosure,
Fig. 2 is an exploded perspective view of one embodiment of a valve assembly in accordance with the present disclosure,
Fig. 3A and 3B show a first flow configuration of an embodiment of a valve assembly in accordance with the present disclosure,
Fig. 4A and 4B show a second flow configuration of an embodiment of a valve assembly in accordance with the present disclosure, and
Fig. 5A and 5B show a third flow configuration of an embodiment of a valve assembly in accordance with the present disclosure.

### Detailed description

Various exemplary embodiments and details are described below, with reference to the figures when relevant. It should be noted that the figures may or may not be drawn to scale, and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practised in any other embodiments even if not so illustrated, or if not so explicitly described.

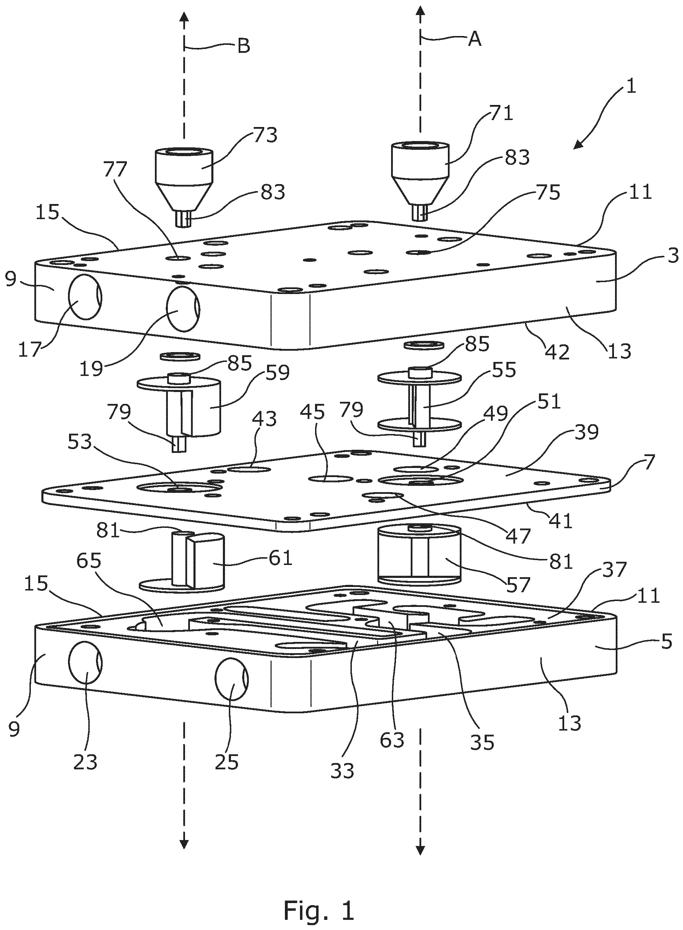

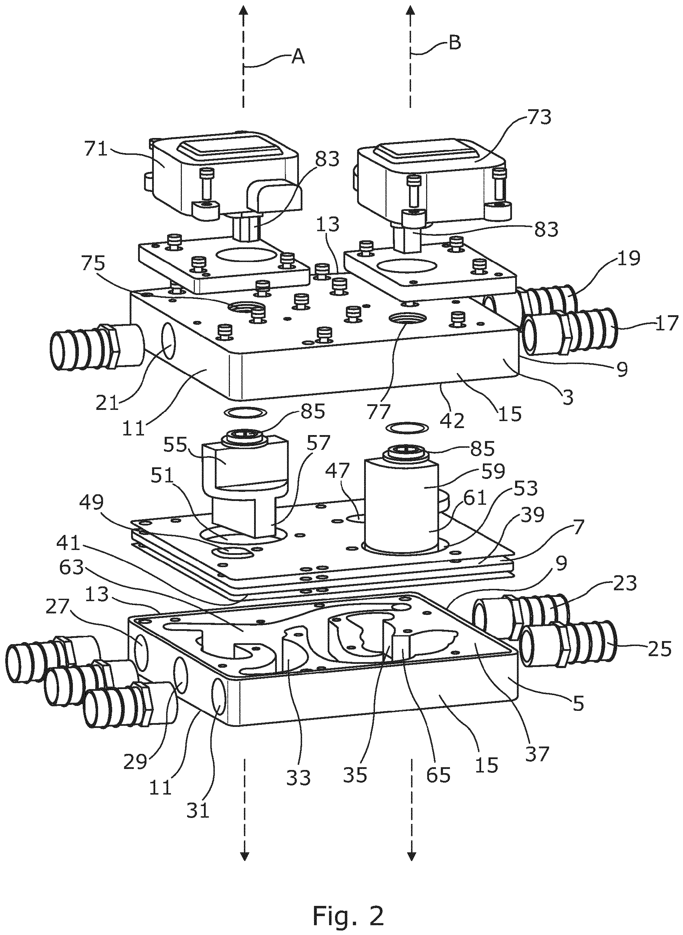

Fig. 1 is an exploded view of a valve assembly 1 in accordance with the present disclosure seen in a first orientation, and Fig. 2 is an exploded view of a valve assembly in accordance with the present disclosure seen in a second orientation. The valve assembly 1 comprises a first part 3, a second part 5 and a connection part 7 arranged between the first part 3 and the second part 5. The valve assembly 1 has a first end 9 and a second end 11, and a first side 13 and a second side 15. The first end 9 of the first part may comprise a first fluid inlet 17 and a fourth outlet 19, while the opposite second end 11 comprises a third outlet 21 (shown in Fig. 2). The first end 9 of the second part 5 comprises a first outlet 23 and a second inlet 25, while the opposing second end 11 comprises a fourth inlet 27, a second outlet 29 and a third inlet 31 (seen in Fig. 2). Thus, the present embodiment of the valve assembly comprises four inlets and four outlets that are distributed between the first part 3 and the second part 5.

The connection part 7 is in the form of a plate or a sheet having a first surface 39 and a second surface 41, where the first surface 39 faces a first surface 42 of the first part 3, and the second surface 41 faces a first surface 37 of the second part 5. The connection part comprises a first fluid communication channel 43, a second fluid communication channel 45, a third fluid communication channel 47 and a fourth fluid communication channel 49, where the fluid communication channels provide fluid communication through the connection part 7 from the first surface 39 to the second surface 41 through the connection part 7. The connection part 7 may further comprise a first valve opening 51 and a second valve opening 53 that are configured to provide a mechanical connection between a first valve 55 and a second valve 57 through the first valve opening 51, and a mechanical connection between a third valve 59 and a fourth valve 61 through the second valve opening 53.

The second part 5 may comprise a plurality of fluid pathways 33 that are formed as grooves 35 in the first surface 37 of the second part 5, where the fluid pathways may extend from one inlet 25, 27, 31, from one outlet 23, 29, or from one fluid communication channel 43, 45, 47, 49, and to another fluid pathway 33 in the first part 3 or the second part 5. Alternatively, the fluid communication channels may be in fluid communication with a second valve seat 63 in the second part 5 or a fourth valve seat 65 in the second part, or to a first valve seat 67 in the first part 3 (not shown) or a third valve seat 69 in the first part 3 (not shown). The first part 3 may have similar fluid pathways 33 in the first surface 42 of the first part 3, as well as valve seats 67 and 69 that are in fluid communication with the fluid inlet 17 or the fluid outlet 19, 21, or are in fluid communication with the valve seats 67, 69 of the first part, or are in fluid communication with the fluid communication channel 43, 45, 47, 49, of the connection part 7. Thus, when the first part 3 is connected to the second part 5 via the connection part 7, the fluid pathways 33 of the first part and the fluid pathways 33 of the second part 5 face each other, and face each surface 39, 41 of the connection part. This allows a fluid that enters the fluid pathway 33 in the first part to be communicated from one fluid inlet to one fluid outlet, irrespective of whether the fluid inlet or the fluid outlet is in the first part 3 or the second part 5.

The valve assembly 1 may further comprise a first actuator 71 and a second actuator 73, where the first actuator 71 may be in mechanical connection with the first valve 55 and the second valve 57 via a first actuator opening 75 in the first part 3, and the second actuator 73 may be in mechanical connection with the third valve 59 and the fourth valve 61 via a second actuator opening 77 in the first part 3. The first valve 55, the second valve 57 and the first actuator 71 may have a common first rotational axis A, allowing a rotational movement of the actuator 71 to be transferred to the first valve 55 and the second valve 57 along the same first rotational axis A. The third valve 59, the fourth valve 61 and the second actuator 73 may have a common second rotational axis B, allowing a rotational movement of the actuator 73 to be transferred to the third valve 59 and the fourth valve 61 along the same second rotational axis B.

In the embodiment shown in Fig. 1, the first valve 55 and the second valve 57 may be separate components that are mechanically coupled to each other via a plug 79 in the first valve 55 and a socket 81 in the second valve 57, and where the first actuator 71 has a drive shaft 83 that connects to a socket 85 in the first valve 55, allowing the drive shaft 83, the first valve 55 and the second valve 57 to be rotationally fixed relative to each other, so that a rotational movement of the drive shaft 83 is transferred as rotational movement to the first valve 55 and the second valve 57, allowing the valve to be rotated from a first position (first mode) to a second position (second mode) and thereby changing the fluid communication through the valve assembly 1. The same applies mutatis mutandis to the second actuator 73, the third valve 59 and the fourth valve 61.

In the embodiment shown in Fig. 2, the first valve 55 and the second valve 57 are constructed as one component, where the first actuator 71 is connected to the valves 55, 57 via a drive shaft 83 and a corresponding socket 85 in the valve component 55, 57. The third valve 59 and the fourth valve 61 are constructed as one component, where the second actuator 73 is connected to the valves 59, 61 via the drive shaft 83 and the corresponding plug 85 in the valve component 59, 61.

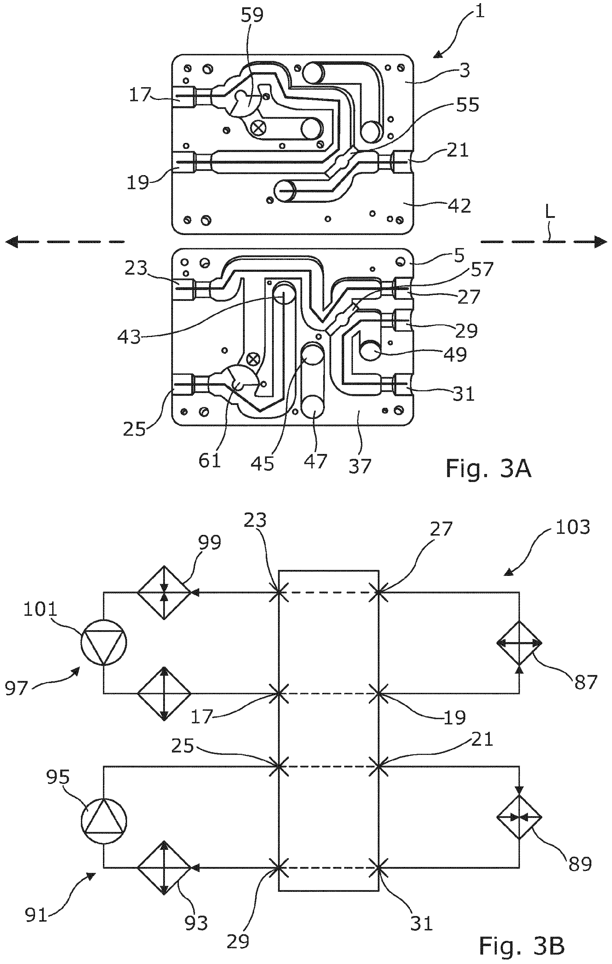

In Figures 3-5, three different configurations are shown of a thermal management system 103 in schematic diagrams 3B, 3C and 3D. The thermal management system 103 is configured so that a valve assembly 1 is connected with an evaporator 87, where the outlet of the evaporator 87 is connected to the fourth inlet 27, and the inlet of the evaporator 87 is connected to the fourth outlet 19. The valve assembly is connected to a condenser 89, where the outlet of the condenser 89 is connected to the third inlet 31, and the inlet of the condenser 89 is connected to the third outlet 21. The valve assembly is furthermore connected to an air cooler assembly 91 having an air cooler 93 and a pump 95, where the outlet of the air cooler assembly 91 is connected to the second inlet 25, and the inlet of the air cooler assembly 91 is connected to the second outlet 29. The valve assembly is furthermore connected to a battery pack assembly 97 having a battery pack 99 and a pump 101, where the outlet of the battery pack assembly 97 is connected to the first fluid inlet 17, and the inlet of the battery pack assembly 97 is connected to the first outlet 23.

Thus, by changing the positions of the valves 55, 57, 59, 61, it may be possible to alter the flow of cooling fluid through the valve assembly 1, and thereby alter the configuration of the thermal management system 103 to suit the conditions required.

Figs. 3A, 4A and 5A show the inner workings of the valve assembly 1, and the different positions of the valve show a different flow configuration inside the valve assembly 1. Figs. 3A, 4A and 5A show a view of the first surface 42 of the first part 3 and the first surface 37 of the second part 5, where the parts 3, 5 may be folded to face each other along the fold line C. The view shown in Figs. 3A, 4A and 5A also shows the fluid communication channels 43, 45, 47, 49 of the connecting part 7 as well as the fluid pathways 33 of the first part 3 and the second part 5.

Figs. 3A and 3B show the valve assembly 1 in a first configuration (chiller configuration), where the thermal management system 103 is in a chiller mode. Fig. 3B shows the schematic view of the chiller mode, where the fourth inlet 27 is in fluid communication with the first outlet 23, and the first fluid inlet 17 is in fluid communication with the fourth outlet 19. Thus, the evaporator 87 is in direct fluid communication with the battery pack assembly 97. The third inlet 31 is in fluid communication with the second outlet 29, and the second inlet 25 is in fluid communication with the third outlet 21, so that the condenser 89 is in fluid communication with the air cooler assembly 91.

Fig. 3A shows the flow paths through the valve assembly 1, where the first valve 55 in its first mode and the third valve 59 in its first mode direct the flow from the first fluid inlet 17 to the fourth fluid outlet 19. The first valve 55 in its first mode and the fourth valve 61 in its first mode direct the flow from the second fluid inlet 25 to the third fluid outlet 21, where the flow passes from the second part 5 through the first fluid communication channel 43 to the first part 3 and out through the third fluid outlet 21. The second valve 57 in its first mode directs the flow from the third fluid inlet 31 to the second fluid inlet 25. The second valve 57 in its first mode directs the fluid flow from the fourth fluid inlet 27 to the first fluid outlet 23.

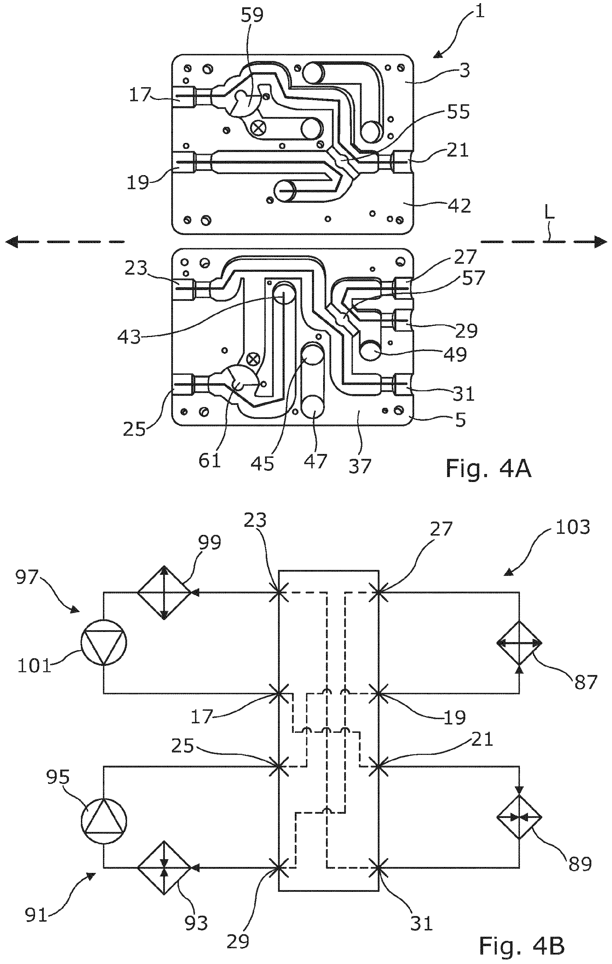

Figs. 4A and 4B show the valve assembly in its second configuration (heat pump configuration), where the thermal management system 103 is in a heat pump mode. In this configuration, the first valve 55 and the second valve 57 have been moved from their first mode to their second mode. Fig. 4B shows the schematic view of the heat pump mode, where the fourth fluid inlet 27 is in fluid communication with the second fluid outlet 29, and the second fluid inlet 25 is in fluid communication with the fourth fluid outlet 19. Thus, the evaporator 87 is in direct fluid communication with the air cooler assembly 91. The third fluid inlet 31 is in fluid communication with the first fluid outlet 23, and the first fluid inlet 17 is in fluid communication with the third fluid outlet 21, so that the condenser 89 is in fluid communication with the battery pack assembly 97.

Fig. 4A shows the flow paths through the valve assembly 1, where the first valve 55 in its second mode and the third valve 59 in its first mode direct the flow from the first fluid inlet 17 to the third fluid outlet 21. The first valve 55 in its second mode and the fourth valve 61 in its first mode direct the flow from the second fluid inlet 25 to the fourth fluid inlet 27, where the flow passes from the second part 5 through the first fluid communication channel 43 to the first part 3 and out through the fourth inlet 27. The second valve 57 in its second mode directs the flow from the third fluid inlet 31 to the first fluid outlet 23. The second valve 57 in its second mode directs the fluid flow from the fourth fluid inlet 27 to the second fluid inlet 25.

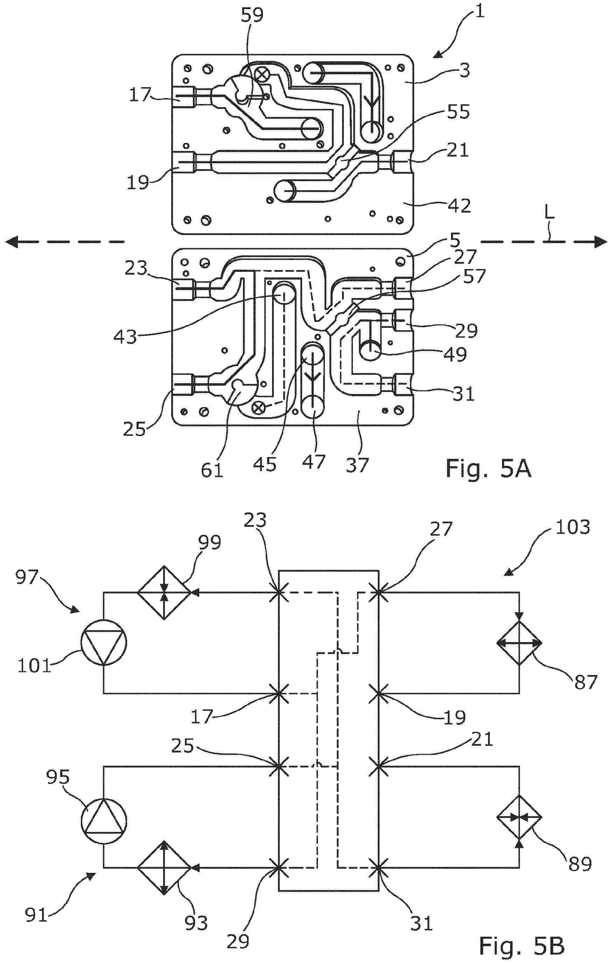

Figs. 5A and 5B show the valve assembly in its third configuration (cooler configuration), where the thermal management system 103 is in a cooler mode. In this configuration, the first valve 55 and the second valve 57 have been moved from their first mode to their second mode, and the third valve 59 and the fourth valve 61 have been moved to their second mode. Fig. 5B shows a schematic view of the cooler mode, where the fourth fluid inlet 27 and the fourth fluid outlet 19 are closed off, so that the evaporator 87 is not in fluid communication with any of the remaining elements of the thermal management system 103. The third fluid outlet 21 and the third fluid inlet 31 are closed off, and thereby any fluid communication from the condenser 89 to any of the remaining elements of the thermal management system is removed. Thus, in this configuration the air cooler assembly 91 is in in fluid communication with the battery pack assembly 97, where the first fluid outlet 23 is in fluid communication with the second fluid inlet 25, and the first fluid inlet 17 is in fluid communication with the second fluid outlet 29.

Fig. 5A shows the flow paths through the valve assembly 1, where the first valve 55 in its second mode and the third valve 59 in its second mode direct the flow from the second fluid inlet 25 to the first fluid outlet 23, and where the pressure difference between the fluid pathways from the fourth fluid inlet 27 to the first fluid outlet 23 ensures that the cooling fluid exits the first fluid outlet 23. The third valve 57 in its second mode closes off the fluid pathway to the fourth fluid outlet 19, ensuring that cooling fluid does not flow through the evaporator 87, and thereby also ensuring that the cooling fluid in the evaporator remains still and blocks the pathway in and out of the fourth fluid inlet 27 and the fourth fluid outlet 19. The first valve 55 in its second mode and the third valve 59 in its second mode direct the flow from the first fluid inlet 17 to the second fluid outlet 29, where the flow passes from the first part 3 to the second part 5 through the second fluid communication channel 45 and back to the first part 3 through the third fluid communication channel 47, and back to the second part 5 through the fourth communication channel to reach the second fluid inlet 25. The fourth valve in its second position closes off the fluid communication with the third fluid outlet 21, thereby ensuring that there is no flow through the condenser 89.

Thus, by moving the valves from their first mode to their second mode selectively, it is possible to alter the flow through the valve assembly 1 to fit the need for a configuration of the valve assembly in the three configurations of the valves as shown in Figs. 3-5.

In the embodiments shown in Figs. 1-5, the first and second valves are in the form of four-way valves, while the third and fourth valves are three-way valves.

The use of the terms "first", "second", "third" and "fourth", "primary", "secondary", "tertiary", etc., does not imply any particular order, but is included to identify individual elements. Moreover, the use of the terms "first", "second", "third" and "fourth", "primary", "secondary", "tertiary", etc., does not denote any order or importance, but rather the terms "first", "second", "third" and "fourth", "primary", "secondary", "tertiary", etc., are used to distinguish one element from another. Note that the words "first", "second", "third" and "fourth", "primary", "secondary", "tertiary", etc., are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are accordingly to be regarded in an illustrative rather than restrictive sense. The claimed invention is intended to cover all alternatives, modifications and equivalents.

### List of references

- 1: Valve assembly
- 3: First part
- 5: Second part
- 7: Connection part
- 9: First end of valve assembly
- 11: Second end of valve assembly
- 13: First side of valve assembly
- 15: Second side of valve assembly
- 17: First fluid inlet
- 19: Fourth fluid outlet
- 21: Third fluid outlet
- 23: First fluid outlet
- 25: Second fluid inlet
- 27: Fourth fluid inlet
- 29: Second fluid outlet
- 31: Third fluid inlet
- 33: Fluid pathways
- 35: Grooves
- 37: First surface of second part
- 39: First surface of connection part
- 41: Second surface of connection part
- 42: First surface of first part
- 43: First fluid communication channel
- 45: Second fluid communication channel
- 47: Third fluid communication channel
- 49: Fourth fluid communication channel
- 51: First valve opening
- 53: Second valve opening
- 55: First valve
- 57: Second Valve
- 59: Third valve
- 61: Fourth valve
- 63: Second valve seat
- 65: Fourth valve seat
- 67: First valve seat
- 69: Third valve seat
- 71: First actuator
- 73: Second actuator
- 75: First actuator opening
- 77: Second actuator opening
- 79: Plug in first valve
- 81: Socket in second valve
- 83: Drive shaft
- 85: Socket in first valve
- 87: Evaporator
- 89: Condenser
- 91: Air cooler assembly
- 93: Air cooler
- 95: Air cooler pump
- 97: Battery pack assembly
- 99: Battery pack
- 101: Battery pack pump
- 103: Thermal management system

## Claims

1. A valve assembly for thermal management systems in vehicles, the valve assembly comprising:
- a first part having a first fluid input and a first fluid output and having a first fluid pathway and a second fluid pathway,
- a second part having a second fluid input and a second fluid output and having a third fluid pathway and a fourth fluid pathway,
- a connection part connecting the first part to the second part and providing a first fluid communication channel from the first fluid pathway or the second fluid pathway to the third fluid pathway or the fourth fluid pathway,
- a first valve positioned in the first part and being in fluid communication with the first fluid pathway and/or the second fluid pathway and where the valve in a first mode is configured to provide fluid communication from the first fluid input or the second fluid input to the first fluid output or the second fluid output,
- a second valve positioned in the second part and being in fluid communication with the third fluid pathway and/or the fourth fluid pathway and where the valve in a first mode is configured to provide fluid communication from the second fluid input or the second fluid input to the second fluid output or the first fluid output, and
- a first actuator configured to move the first valve and the second valve from the first mode to the second mode simultaneously, and vice versa.

2. A valve assembly in accordance with claim 1, wherein the first valve has a first rotational axis, and the second valve has a second rotational axis, and where the first rotational axis and the second rotational axis are coincident (coaxial).

3. A valve assembly in accordance with any of the preceding claims, where the first part and/or the second part has/have a first surface, and where the fluid pathways are formed as channels extending into the first surface of the first part and/or the second part (where the fluid pathways of one part are in a mutual plane).

4. A valve assembly in accordance with claim 3, where the connection part has a first surface that is connected to the first surface of the first part and a second surface that is connected to the first surface of the second part (where the connection parts define a part of the fluid pathways of the first and/or the second part (i.e. close off the pathways in a radial direction)).

5. A valve assembly in accordance with any of the preceding claims, where the valve assembly further comprises:
- a third valve positioned in the first part and being in fluid communication with the first fluid pathway and/or the second fluid pathway and where the valve in a first mode is configured to provide fluid communication from the first fluid input or the second fluid input to the first fluid output or the second fluid output,
- a fourth valve positioned in the second part and being in fluid communication with the third fluid pathway and/or the fourth fluid pathway and where the valve in a first mode is configured to provide fluid communication from the second fluid input or the second fluid input to the second fluid output or the first fluid output, and
- a second actuator configured to move the first valve and the second valve from the first mode to the second mode simultaneously, and vice versa.

6. A valve assembly in accordance with claim 5, wherein the third valve has a third rotational axis, and the fourth valve has a second rotational axis, where the third rotational axis and the fourth rotational axis are coincident (coaxial).

7. A valve assembly in accordance with any of the preceding claims, where the first part or the second part comprises a third fluid input and/or a third fluid output and a fourth fluid input and/or a fourth fluid output.

8. A valve assembly in accordance with any of the preceding claims, where the first valve and the second valve are constructed as one component and/or where the third valve and the fourth valve are constructed as a single component.

9. A valve assembly in accordance with any of the preceding claims, wherein the connection part comprises a first valve opening that is coincident (coaxial) with the rotational axis of the first valve and the second valve and/or a second valve opening that is coincident (coaxial) with the rotational axis of the third valve and the fourth valve.

10. A valve assembly in accordance with any of the preceding claims, wherein the connection part separates a fluid pathway of the first part from a fluid pathway of the second part.

11. A valve assembly in accordance with any of the preceding claims, wherein the valve assembly is a layered construction, where the first part is in a first layer, the connection part is in a second layer, and the second part is in a third layer, and where the second layer is positioned between the first layer and the third layer.

12. A valve assembly in accordance with any of the preceding claims, wherein the first part comprises a first valve seat configured to receive the first valve and/or the third valve, and the second part comprises a second valve seat configured to receive the second valve and/or the fourth valve.
